# EUROPEAN PATENT APPLICATION

(11) **EP 4 300 084 A1**
(43) Date of publication of application: **03.01.2024**
(21) Application number: 22759780.4
(22) Date of filing: 25.02.2022
(51) Int. Cl.: G01N 23/18

(54) **IMAGE DISPLAY DEVICE, IMAGE DISPLAY METHOD, AND PROGRAM**

(30) Priority: 26.02.2021 JP 2021031133
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2022/007786
(87) International publication number: WO 2022/181746

(57) **Abstract**

Provided are an image display device, an image display method, and a program that facilitate a determination of a defect in an inspection target image regardless of the appearance of the defect. A determined image in which a second inspection object is imaged and a determination result of a defect is given is extracted from a database, and at least two or more determined images are based on an inspection target image in which a first inspection object is imaged and the extracted determined image are displayed on a display. At least two or more determined images include a first determined image in which the defect of the second inspection object is visually recognized in a first appearance, and a second determined image in which the defect of the second inspection object is visually recognized in a second appearance different from the first appearance and in which a determination result is the same as that of the first determined image.

## Description

### BACKGROUND OF THE INVENTION

### 1. Field of the Invention

The present invention relates to an image display device, an image display method, and a program, and more particularly relates to a technique for determining a defect of an inspection object from an image of the inspection object.

### 2. Description of the Related Art

In a case of displaying a reference image and a comparison image, a device is known which corrects a position and a magnification of the reference image to be the same as those of the comparison image and causes display means to display the reference image so that it can be compared with the comparison image (JP2004-78690A).

### SUMMARY OF THE INVENTION

A technique described in JP2004-78690A is a technique for the purpose of determining forgery or the like of a printed article, and is effective in determining whether or not an inspection target image of a printed article and a reference image of the printed article which is imaged under the same imaging conditions are matched by one-to-one comparison. However, the required specifications differ for the purpose of determining the presence or absence of a defect and the degree of the defect, and the technique described in JP2004-78690A cannot be applied.

In a scene where it is desired to compare an image of an inspection object and a reference image in order to determine the presence or absence of the defect and the degree of the defect in non-destructive inspection, infrastructure checking, or the like, it is not always possible to image the same object and the same position under the same imaging conditions for both images. Further, in a case in which the imaging conditions, the object, the imaging position, and the like are different, even though the defects should be determined as the same degree of defects, the degree of the defect may appear different, which makes the determination difficult in some cases.

The present invention has been made in view of such circumstances, and an object of the present invention is to provide an image display device, an image display method, and a program that facilitate a determination of a defect in an inspection target image regardless of the appearance of the defect.

One aspect of an image display device for achieving the above object is an image display device comprising, at least one processor, and at least one memory that stores an instruction to be executed by the at least one processor, in which wherein the at least one processor acquires an inspection target image in which a first inspection object is imaged, extracts a determined image from a database in which a plurality of determined images in which a plurality of second inspection objects different from the first inspection object are imaged, respectively, and to which determination results of a defect of the plurality of second inspection objects are given, respectively, are stored, and displays the inspection target image and at least two or more determined images based on the extracted determined image on a display, and the at least two or more determined images include a first determined image in which the defect of the second inspection object is visually recognized in a first appearance and a second determined image in which the defect of the second inspection object is visually recognized in a second appearance different from the first appearance and in which the determination result is the same as the first determined image. According to the aspect, it is possible to facilitate the determination of the defect in the inspection target image regardless of the appearance of the defect.

It is preferable that the at least one processor extracts the first determined image and the second determined image from the database.

It is preferable that the at least one processor extracts the first determined image from the database, and generates the second determined image based on the first determined image.

It is preferable that the at least one processor generates the first determined image and the second determined image based on the extracted determined image.

It is preferable that in the database, only a plurality of the determined images in which the second inspection object having the defect is imaged are stored.

It is preferable that in the database, a plurality of determined images to which a determination result of presence or absence of the defect of the second inspection object is given are stored, and each of the first determined image and the second determined image is given a determination result of having the defect.

It is preferable that in the database, a plurality of determined images to which a determination result of a type or a degree of the defect of the second inspection object is given are stored, and each of the first determined image and the second determined image has the same determination result of the type or the degree of the defect.

It is preferable that at least one processor receives a region of interest of the inspection target image, and extracts the at least two or more determined images including a region related to the received region of interest.

It is preferable that the at least one processor receives the region of interest input by a user or the region of interest obtained from an image analysis result of the inspection target image.

It is preferable that the at least one processor receives at least one of character information or numerical information, and extracts at least two or more determined images related to at least one of the received character information or numerical information.

It is preferable that the at least one processor receives at least one of the character information or the numerical information input by a user, or at least one of the character information or the numerical information obtained from an image analysis result of the inspection target image.

It is preferable that, in a case in which a display parameter of at least one item of contrast, sharpness, brightness, brightness of a background, or an unique item set by a user of the inspection target image is set as a first reference value, the first determined image has a first value that is relatively smaller than the first reference value for the display parameter of the at least one item and in which the defect is visually recognized in the first appearance, and the second determined image has a second value that is relatively larger than the first reference value for the display parameter of the at least one item and in which the defect is visually recognized in the second appearance.

It is preferable that the at least one processor disposes and displays at least three or more determined images based on the extracted determined image in ascending or descending order of a value of the display parameter of the at least one item on the display.

It is preferable that, in a case in which a grade of difficulty of determination of the defect of the inspection target image, which is the unique item set by the user, is set as a second reference value, the first determined image has a third value that is relatively lower than the second reference value for the grade of the difficulty of the determination of the defect and in which the defect is visually recognized in the first appearance, and the second determined image has a fourth value that is relatively higher than the second reference value for the grade of the difficulty of the determination of the defect and in which the defect is visually recognized in the second appearance.

It is preferable that the at least one processor specifies the second reference value, the third value, and the fourth value based on a value of contrast of brightness between a defect candidate region and a background region excluding the defect candidate region.

It is preferable that the at least one processor specifies the second reference value, the third value, and the fourth value based on at least one of a pixel value, a shape, or an area of a defect candidate region.

It is preferable that the at least one processor specifies the second reference value, the third value, and the fourth value based on at least one of an overlapping manner of defect candidate regions and a texture of a peripheral region of the defect candidate region.

It is preferable that the at least one processor specifies the second reference value, the third value, and the fourth value based on at least one of a skill of a determiner, a reliability degree of the determiner, whether or not there is variation in determination results by a plurality of the determiners, or a time required for determination.

It is preferable that the determined image stored in the database is given a value of the grade of the difficulty in advance.

It is preferable that the at least one processor extracts three or more determined images each having a value of a different grade for the difficulty from the database, and disposes and displays the three or more determined images in ascending or descending order of the value of the grade on the display.

One aspect of an image processing method for achieving the above object is an image display method comprising: an inspection target image acquisition step of acquiring an inspection target image in which a first inspection object is imaged, a determined image extraction step of extracting a determined image from a database in which a plurality of determined images in which a plurality of second inspection objects different from the first inspection object are imaged, respectively, and to which determination results of a defect of the plurality of second inspection objects are given, respectively, are stored, and a display control step of displaying the inspection target image and at least two or more determined images based on the extracted determined image on a display, in which the at least two or more determined images include a first determined image in which the defect of the second inspection object is visually recognized in a first appearance and a second determined image in which the defect of the second inspection object is visually recognized in a second appearance different from the first appearance. According to the aspect, it is possible to facilitate the determination of the defect in the inspection target image regardless of the appearance of the defect.

One aspect of a program for achieving the above object is a program for causing a computer to execute the image display method. A computer-readable non-transitory storage medium on which the program is recorded may also be included in the aspect.

According to the present invention, it is possible to facilitate the determination of the defect in the inspection target image regardless of the appearance of the defect.

### BRIEF DESCRIPTION OF THE DRAWINGS

Fig. 1 is a block diagram illustrating a defect inspection system.
Fig. 2 is a block diagram illustrating an example of an imaging system.
Fig. 3 is a flowchart illustrating steps of an image display method.
Fig. 4 is a diagram illustrating an example of a screen of a display on which an inspection target image is displayed.
Fig. 5 is a diagram illustrating an example of input of a region of interest by a user.
Fig. 6 is a diagram illustrating an example of a screen of a display on which a determined image is displayed.
Fig. 7 is a diagram illustrating an example of a screen of a display for allowing the user to select a stage display item.
Fig. 8 is a diagram illustrating an example of a screen of a display on which a determined image is displayed.
Fig. 9 is a diagram illustrating an example of a screen display of a display for the user to input character information.
Fig. 10 is a diagram illustrating an example of a screen display of a display for the user to input numerical information.

### DESCRIPTION OF THE PREFERRED EMBODIMENTS

Hereinafter, a preferred embodiment of the present invention will be described in accordance with the accompanying drawings.

### [Image display device]

An image display device according to the present embodiment is used in a defect inspection system of non-destructive inspection. The defect inspection system is a system in which a user determines a defect of an inspection object from an image in which an industrial product, which is the inspection object, is imaged. Here, an example in which an image of the inspection object captured by the user is displayed and an image referred to for determining a defect of the inspection object is displayed will be described. Here, a case in which an inspection target image of the inspection object is a radiation image of an industrial product will be described, but the inspection target image may be other objects and other interpretation target images. In addition, the industrial product which is the inspection object is not particularly limited in material such as metal or resin, and may be before or after processing, or may be a part or an assembly.

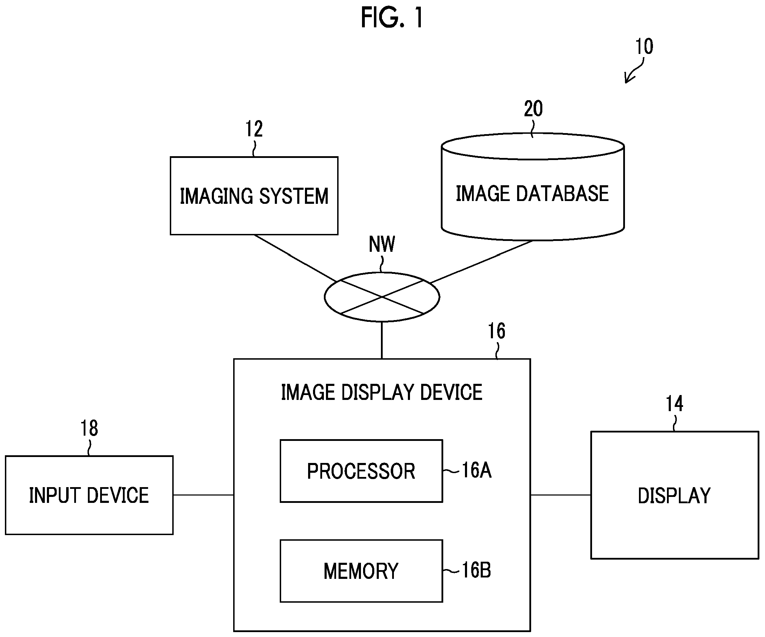

Fig. 1 is a block diagram illustrating a defect inspection system 10 according to the present embodiment. As illustrated in Fig. 1, the defect inspection system 10 comprises an imaging system 12, a display 14, an image display device 16, an input device 18, and an image database 20.

The imaging system 12 is a system that captures an image of an inspection object OBJ, which is a first inspection object. Details regarding the imaging system 12 will be described later.

The display 14 is a display device for allowing the user to visually recognize an inspection target image or the like in which the inspection object OBJ is imaged. The display 14 displays a screen necessary for an operation of the input device 18, and functions as a part for implementing a graphical user interface (GUI).

The image display device 16 is a control device for displaying an image of the inspection object OBJ imaged by the imaging system 12 on the screen of the display 14. The image display device 16 comprises a processor 16A and a memory 16B.

The processor 16A executes an instruction stored in the memory 16B. A plurality of processors 16A may be comprised.

A hardware structure of the processor 16A is various processors as described below. The various processors include a central processing unit (CPU) that is a general-purpose processor actioning as various functional units by executing software (program), a graphics processing unit (GPU) that is a processor specially designed for image processing, a programmable logic device (PLD) such as a field programmable gate array (FPGA) that is a processor having a circuit configuration changeable after manufacturing, and a dedicated electric circuit or the like such as an application specific integrated circuit (ASIC) that is a processor having a circuit configuration dedicatedly designed to execute a specific type of processing.

One processing unit may be configured by one processor among these various processors, or may be configured by two or more same or different kinds of processors (for example, a combination of a plurality of FPGAs, a combination of the CPU and the FPGA, or a combination of the CPU and GPU). In addition, a plurality of functional units may be formed of one processor. As an example of configuring the plurality of functional units with one processor, first, as represented by a computer such as a client or a server, a form of configuring one processor with a combination of one or more CPUs and software and causing the processor to act as the plurality of functional units is present. Second, as represented by a system on chip (SoC) or the like, a form of using a processor that implements the function of the entire system including the plurality of functional units using one integrated circuit (IC) chip is present. Accordingly, various functional units are configured using one or more of the various processors as a hardware structure.

Furthermore, the hardware structure of the various processors is more specifically an electric circuit (circuitry) in which circuit elements such as semiconductor elements are combined.

The memory 16B stores instructions to be executed by the processor 16A. The memory 16B includes a random access memory (RAM) and a read only memory (ROM), which are not illustrated. The processor 16A uses the RAM as a work region, executes software using various programs and parameters including an image display program stored in the ROM, and executes various processing of the image display device 16 using the parameters stored in the ROM or the like.

The input device 18 is an interface that receives an operation input from the user. The input device 18 includes a keyboard for inputting characters and a pointing device for operating a pointer, an icon, or the like displayed on the screen of the display 14. The input device 18 may be a touch-panel display integrated with the display 14.

The image database 20 is composed of a high-capacity storage device. The image database 20 stores a plurality of determined images, each of which is captured in the past, of a plurality of different second inspection objects. Each of the determined images is associated with the determination result of the defect of the second inspection object. The second inspection object is an article different from the inspection object OBJ, and the plurality of second inspection objects are articles different from each other. The second inspection object may be, for example, the same standard product as the inspection object OBJ or an article having a different shape from the inspection object OBJ.

The determination result of the defect of the second inspection object stored in the image database 20 may be the determination result of the presence or absence of the defect or may be the determination result of the type or degree of the defect of the second inspection object. In addition, in the image database 20, a plurality of determined images in which the second inspection object having a defect is imaged may be stored. In this case, it can be understood that the determined images stored in the image database 20 are associated with the determination results that it has a defect.

The imaging system 12, the image display device 16, and the image database 20 are communicably connected through a network NW. The network NW is, for example, a local area network (LAN), a wide area network (WAN), or an Internet connection. The imaging system 12, the image display device 16, and the image database 20 may be communicably connected by a universal serial bus (USB) cable or the like, or may be communicably connected by short-range wireless communication using infrared rays or the like. The imaging system 12, the image display device 16, and the image database 20 may exchange data including an image through a storage medium that is detachable and readable, respectively.

### [Imaging system]

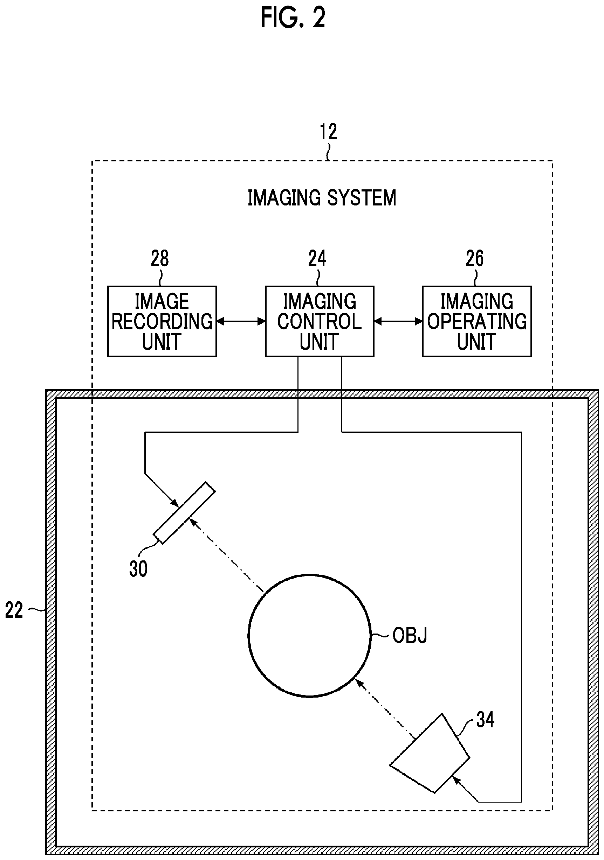

Fig. 2 is a block diagram illustrating an example of an imaging system 12. As illustrated in Fig. 2, the imaging system 12 comprises an imaging room 22, an imaging control unit 24, an imaging operating unit 26, an image recording unit 28, a radiation detector 30, and a radiation source 34.

In the imaging room 22, a partition wall and the entrance/exit between the imaging room 22 and the outside are protected from X-ray by an X-ray protective material (for example, lead, concrete, or the like). In addition to the radiation detector 30 and the radiation source 34, an inspection object OBJ, which is an imaging target, is disposed inside the imaging room 22.

The imaging control unit 24 includes a CPU that controls an operation of each unit of the imaging system 12. The imaging control unit 24 receives an operation input from an imaging technician through the imaging operating unit 26, and transmits a control signal corresponding to the received operation input to each unit of the imaging system 12 to control the operation of each unit.

The imaging operating unit 26 is an input device that receives an operation input from the imaging technician. The imaging technician can perform, through the imaging operating unit 26, an input of information regarding the inspection object OBJ, an input of an instruction to execute imaging to the radiation detector 30 (including settings for imaging conditions such as exposure time, focal length, and stop, imaging angle, and imaging location), an input of an instruction of radiation irradiation to the radiation source 34 (including settings for irradiation start time, irradiation duration, irradiation angle, and irradiation intensity) and an input of an instruction to record the acquired image in the image recording unit 28.

The image recording unit 28 records an image (light-receiving image data) of the inspection object OBJ, which is imaged by the radiation detector 30. The image recording unit 28 records information for specifying the inspection object OBJ in association with the image.

For example, the radiation source 34 is an X-ray source. The radiation source 34 irradiates the inspection object OBJ in the imaging room 22 with radiation in response to an instruction from the imaging control unit 24. In a case in which the inspection object OBJ is irradiated with visible light for imaging, it is not necessary to use the imaging room 22 with protection.

The radiation detector 30 receives the radiation irradiated from the radiation source 34 to the inspection object OBJ and transmitted through the inspection object OBJ, and images the inspection object OBJ in response to an instruction to execute imaging from the imaging control unit 24. The inspection object OBJ is held in the imaging room 22 by a holding member (for example, a manipulator, a mounting table, or a movable mounting table) which is not illustrated, and the distance and the angle of the inspection object OBJ with respect to the radiation detector 30 and the radiation source 34 can be adjusted. The operator can control relative positions of the inspection object OBJ, the radiation detector 30, and the radiation source 34 through the imaging control unit 24, and can image a desired location of the inspection object OBJ.

The radiation source 34 ends the irradiation of the radiation to the inspection object OBJ in synchronization with the end of the execution of the imaging by the radiation detector 30.

In an example illustrated in Fig. 2, the radiation detector 30 is disposed inside the imaging room 22, but the radiation detector 30 may be disposed outside the imaging room 22 as long as it can image the inspection object OBJ in the imaging room 22.

In addition, in the example illustrated in Fig. 2, one radiation detector 30 and one radiation source 34 are provided, but the number of radiation detectors and radiation sources is not limited thereto. For example, a plurality of the radiation detectors and a plurality of the radiation sources may be provided.

### [Image display method]

An image display method using the image display device 16 will be described. The image display method is implemented by the processor 16A executing an image display program stored in the memory 16B. The image display program may be provided by a computer-readable non-transitory storage medium. In this case, the image display device 16 may read the image display program from the non-transitory storage medium and store it in the memory 16B.

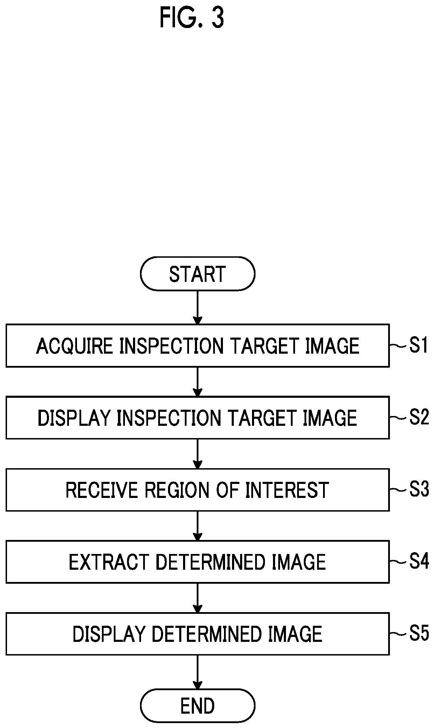

Fig. 3 is a flowchart illustrating steps of the image display method. The image display method according to the present embodiment includes displaying of an image in which the inspection object OBJ is captured and an image which is referred to determine the defect of the inspection object OBJ, in order to facilitate the determination of the defect of the inspection object OBJ by the user.

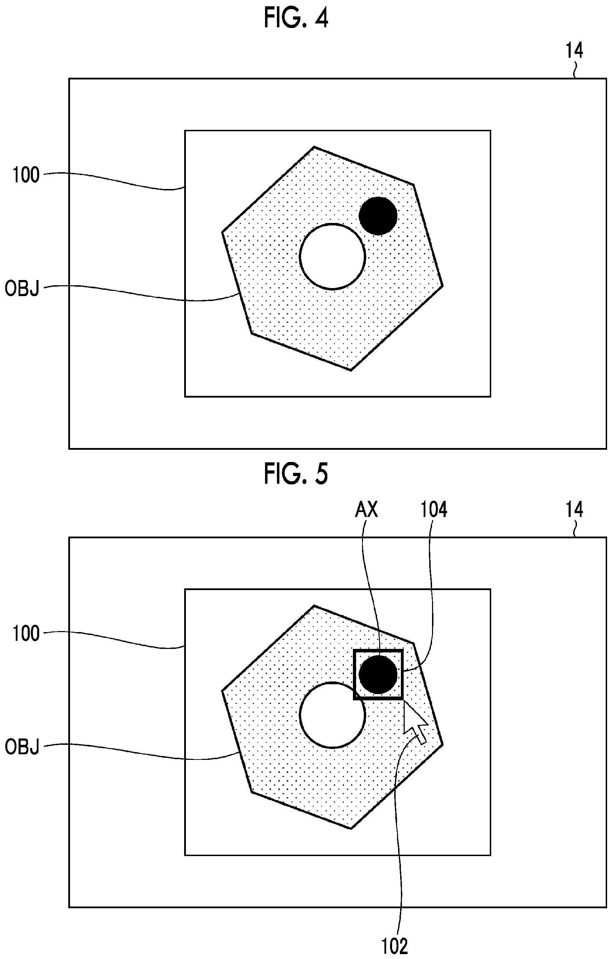

The processor 16A of the image display device 16 acquires an inspection target image in which a first inspection object is imaged (Step S 1: an example of an inspection target image acquisition step). Here, the processor 16A acquires an inspection target image 100 (refer to Fig. 4) in which the inspection object OBJ is imaged from the image database 20 through a network NW. The inspection target image 100 is an image in which the inspection object OBJ is imaged in the imaging system 12.

Next, the processor 16A displays the acquired inspection target image on the display (Step S2). Fig. 4 is a diagram illustrating an example of the screen of the display 14 on which the inspection target image 100 is displayed. The user can determine the defect of the inspection object OBJ while viewing this screen.

Subsequently, the processor 16A receives a region of interest of the inspection target image input by the user (Step S3). The user uses the input device 18 to input an arbitrary region of the inspection target image 100 displayed on the display 14 as the region of interest.

Fig. 5 is a diagram illustrating an example of input of the region of interest by the user. Here, the user designates a range 104 with the cursor 102 by a drag operation of a pointing device (not illustrated) and inputs a region of interest AX included in the range 104. The input of the region of interest by the user is not limited to the drag operation of the pointing device, and may be a touch operation of the touch panel or may be a coordinate input operation by a keyboard or the like.

The region of interest received in Step S3 may be a region of interest obtained from the image analysis result of the inspection target image 100. In this case, the processor 16A performs image analysis of the inspection target image 100, extracts a defect candidate region of the inspection object OBJ, and sets the defect candidate region as the region of interest. In a case in which a plurality of defect candidate regions are extracted by the image analysis, the processor 16A may allow the user to select which defect candidate region is to be the region of interest. The processor 16A may extract the defect candidate region by a trained model that outputs the defect candidate region in a case in which the inspection target image is given as an input. A convolution neural network (CNN) can be applied to the trained model.

Next, the processor 16A extracts at least two or more determined images from the database (Step S4: an example of a determined image extraction step). Here, the processor 16A extracts at least two or more determined images including a region related to the region of interest AX received in Step S3 from the image database 20. The region related to the region of interest AX is, for example, a region in which at least one of a type of a defect, a size of the defect, or a density of the defect is similar to a defect candidate included in the region of interest AX.

Here, in at least the two or more determined images, a first determined image in which a first defect of a second determined inspection object is visually recognized in a first appearance, and a second determined image in which a second defect of the second determined inspection object is visually recognized in a second appearance different from the first appearance are included. The inspection object OBJ, the second determined inspection object of the first determined image, and the second determined inspection object of the second determined image may each have the same shape or may have different shapes.

In addition, a determination result given to the first determined image and a determination result given to the second determined image are the same. For example, in a case in which only a plurality of determined images in which the second inspection object having a defect is imaged are stored in the image database 20, even though the processor 16A extracts any of the first determined image and the second determined image, the determination result given to the first determined image and the determination result given to the second determined image are the same.

In addition, in a case in which the image database 20 stores a plurality of determined images to which the determination result of the presence or absence of the defect of the second inspection object is given, the processor 16A extracts, as the first determined image and the second determined image, an image of a determination result with defects or a determination result without defects.

Furthermore, in a case in which the image database 20 stores a plurality of determined images to which a determination result of the type or the degree of the defect of the second inspection object is given, the processor 16A extracts, as the first determined image and the second determined image, an image having the same determination result of the type or the degree of the defect.

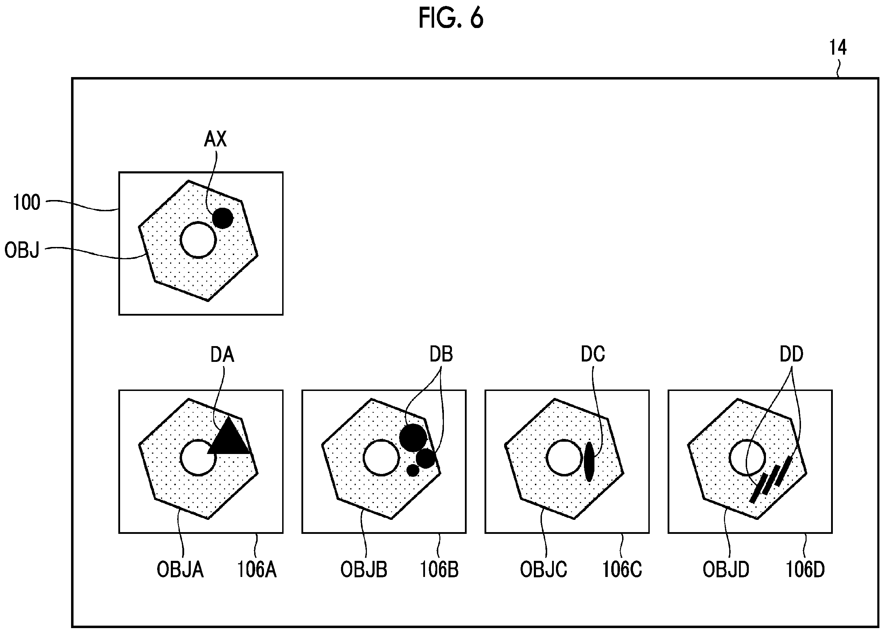

Here, the processor 16A acquires four determined inspection objects OBJA, OBJB, OBJC, and OBJD and the determined images 106A, 106B, 106C, and 106D (refer to Fig. 6). The determined images 106A, 106B, 106C, and 106D each include defects DA, DB, DC, and DD (refer to Fig. 6) that are regions related to the region of interest AX received in Step S3.

Finally, the processor 16A displays the inspection target image 100 acquired in Step S1 and the determined images 106A, 106B, 106C, and 106D which are at least two or more determined images extracted in Step S4 on the display 14 (Step S5: an example of display control step). This is the end of processing of the present flowchart.

Fig. 6 is a diagram illustrating an example of the screen of the display 14 on which determined images 106A, 106B, 106C, and 106D are displayed. As illustrated in Fig. 6, the determined images 106A, 106B, 106C, and 106D are displayed on the display 14 together with the inspection target image 100. The user can appropriately determine the defect of the region of interest AX by comparing the region of interest AX of the inspection target image with the defects DA, DB, DC, and DD on this screen.

### [Image to be displayed]

At least two or more determined images displayed on the display 14 in the present embodiment differ from each other in the contrast, the sharpness, the brightness, the brightness of background, and the value of the display parameter of the stage display item, which is at least one of the unique items set by the user. Here, the value of the display parameter of the stage display item of the inspection target image 100 is set as a first reference value.

A defect DA of a determined inspection object OBJA imaged in the determined image 106A illustrated in Fig. 6 is a defect visually recognized in the first appearance. The determined image 106A has a first value that is relatively smaller than the first reference value for the display parameter of the stage display item and in which the defect DA is visually recognized in the first appearance.

A defect DB of a determined inspection object OBJB imaged in the determined image 106B is a defect visually recognized in the second appearance. The determined image 106B has a second value that is relatively larger than a reference value for the display parameter of the stage display item and in which the defect DB is visually recognized in the second appearance.

A defect DC of a determined inspection object OBJC imaged in the determined image 106C is a defect visually recognized in a third appearance. The determined image 106C has a fifth value that is relatively larger than the second value for the display parameter of the stage display item and in which the defect DC is visually recognized in the third appearance.

A defect DD of a determined inspection object OBJD imaged in the determined image 106D is a defect visually recognized in a fourth appearance. The determined image 106D has a sixth value that is relatively larger than the fifth value for the display parameter of the stage display item, and in which the defect DD is visually recognized in the fourth appearance.

In this way, in the present embodiment, the processor 16A causes the display 14 to display the determined images 106A, 106B, 106C, and 106D, which are three or more determined images each having a different value for the display parameters of the stage display items. In addition, the processor 16A acquires the first reference value of the display parameter of the stage display item of the inspection target image 100, and causes the display 14 to display, among the plurality of determined images to be displayed, at least one determined image having a value relatively smaller than the first reference value for the display parameter of the stage display item and at least one determined image having a value relatively larger than the first reference value.

Furthermore, the processor 16A disposes three or more determined images in ascending or descending order of the values of the display parameters of the stage display items and causes the display 14 to display them. In an example illustrated in Fig. 16, the determined images 106A, 106B, 106C, and 106D are disposed in ascending order from a left side to a right side of the screen.

In this way, by presenting images step by step according to the values of the display parameters, it is possible to prevent the inspection object OBJ from being easily overlooked, and it is possible to make a more unified and appropriate determination of the defect.

### [Generation of determined image]

Up to this point, an example in which the processor 16A extracts all of at least two or more determined images to be displayed on the display 14 from the image database 20 has been described, but the determined images to be displayed on the display 14 may be any image as long as it is an image based on the determined image extracted from the image database 20.

For example, the processor 16A may extract the determined image 106B from the image database 20, and may generate the determined image 106A, the determined image 106C, and the determined image 106D in which the values of the display parameters of the stage display items are different based on the determined image 106B. In addition, the processor 16A may generate the determined image 106A, the determined image 106B, the determined image 106C, and the determined image 106D in which the values of the display parameters of the stage display items are different from each other based on the determined images extracted from the image database 20. The determined image generated in this way has the same defect determination result as the underlying determined image extracted from the image database 20.

### [Selection of stage display item]

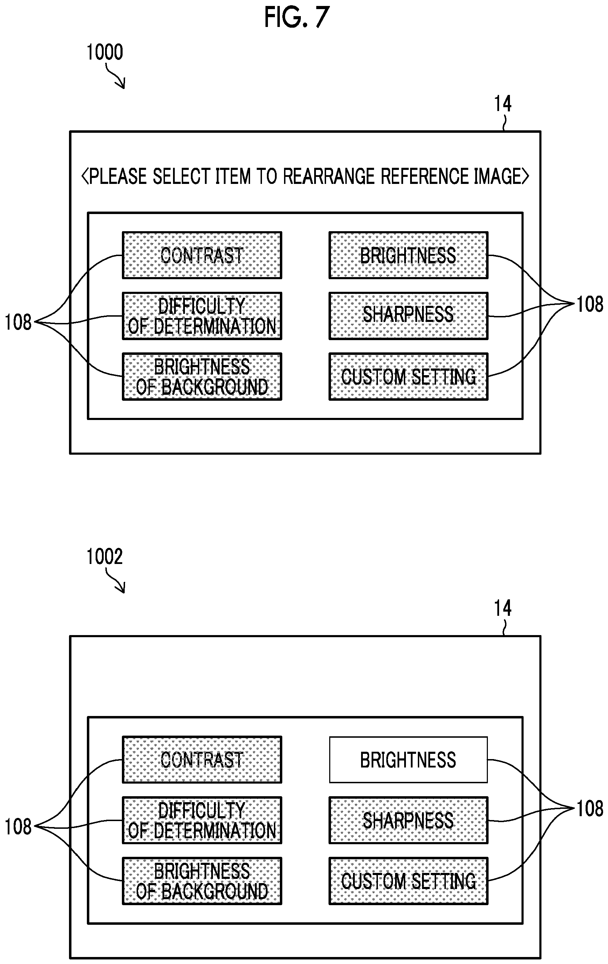

The stage display items may be configured to be selectable by the user. Fig. 7 is a diagram illustrating an example of the screen of the display 14 for causing the user to select an item to rearrange the reference image, that is, a stage display item of the determined image. 1000 in Fig. 7 illustrates a screen before selection by the user. Here, buttons 108 for "contrast", "brightness", "difficulty of determination", "sharpness", "brightness of background", and "custom setting" are displayed so as to be selectable. By selecting at least one button 108 of these items using a pointing device (not illustrated), the user can set at least one of "contrast", "brightness", "difficulty of determination", "sharpness", "brightness of background" or "custom setting" as a stage display item.

The "difficulty of determination" and the "custom setting" are examples of "unique item set by a user". In a case in which the user selects "custom setting", a desired item can be set. The "difficulty of determination" will be described later.

1002 of Fig. 7 illustrates the screen after the selection of the stage display item by the user. Here, an example in which "brightness" is selected is illustrated, and the button 108 of the selected "brightness" item is highlighted and displayed.

In this case, the processor 16A acquires a first reference value which is a value of a display parameter of the brightness of the inspection target image, and sets at least one of the plurality of the determined images to be displayed as a determined image having a value relatively smaller than the first reference value for the brightness and sets at least one of the plurality of the determined images to be displayed as a determined image having a value relatively larger than the first reference value.

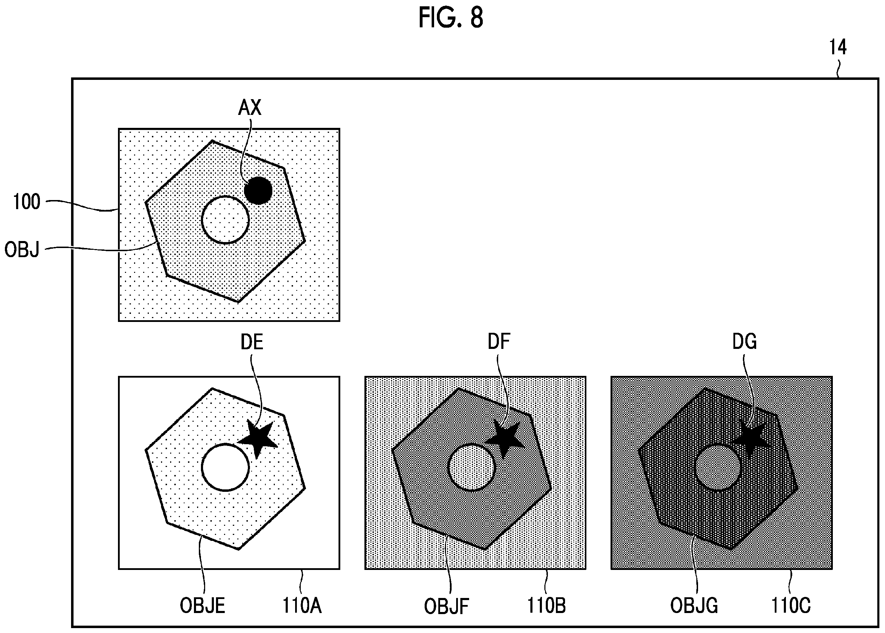

Fig. 8 is a diagram illustrating an example of the screen of the display 14 on which the determined image selected in this way is displayed. Here, the display 14 displays three determined inspection objects OBJE, OBJF, and OBJG and the determined images 110A, 110B, and 110C together with the inspection target image 100. The determined images 110A, 110B, and 110C each include defects DE, DF, and DG, which are regions related to the region of interest AX.

The determined image 110A has a first value that is relatively smaller than a first reference value for the display parameter of the brightness, and in which the defect DE is visually recognized in the first appearance.

The determined image 110B has a second value that is relatively larger than the first reference value for the display parameter of the brightness and in which the defect DF is visually recognized in the second appearance.

The determined image 110C has a seventh value that is relatively larger than a second value for the display parameter of the brightness and in which the defect DG is visually recognized in the third appearance.

### [Difficulty of determination]

The unique item set by the user includes a difficulty of determination for the defect. In 1000 in Fig. 7, in a case in which "difficulty of determination" is selected, the processor 16A acquires a second reference value, which is a value of a grade of difficulty of determination of the defect of the inspection target image, and sets at least one of the plurality of determined images to be displayed as a determined image having a third value that is relatively lower than the second reference value for the grade of the difficulty of determination of the defect and in which the defect is visually recognized in the first appearance and sets at least one of the plurality of determined images to be displayed as a determined image having a fourth value that is relatively higher than the second reference value for the grade of the difficulty of determination of the defect and in which the defect is visually recognized in the second appearance.

Here, the processor 16A specifies the second reference value, the third value, and the fourth value based on a value of the contrast of the brightness between a defect candidate region and a background region excluding the defect candidate region. The defect candidate region includes a defect region that is determined to be a defect.

The processor 16A specifies the second reference value, the third value, and the fourth value based on at least one of a pixel value, a shape, or an area of the defect candidate region. For example, the relatively high grade is given as the pixel value of the defect candidate region is relatively smaller (lower brightness), the shape of the defect candidate region is relatively narrower, and the area of the defect candidate region is relatively smaller.

In addition, the processor 16A may specify the second reference value, the third value, and the fourth value based on at least one of the overlapping manner of the defect candidate regions or the texture of the peripheral region of the defect candidate region. For example, the relatively high grade is given as the overlapping manner of the defect candidate regions are relatively large, and the texture of the peripheral region of the defect candidate region is relatively similar to the defect candidate region.

Furthermore, the processor 16A may specify the second reference value, the third value, and the fourth value based on at least one of a skill of the determiner, a reliability degree of the determiner, whether or not there is variation in the determination results by the plurality of determiners, or a time required for the determination. For example, since a defect in which the variation in the determination results of the plurality of determiners is relatively large is considered to have a higher difficulty of determination than a defect in which the variation in the determination results is relatively small, the relatively high grade is given. The processor 16A can give a more appropriate grade by weighting the determination results according to the skill of each of the determiners and the reliability degree of the determiners in a case of evaluating the variation in the determination results of the plurality of determiners. The skill of the determiner and the reliability degree of the determiner may be stored in the memory 16B in advance.

In addition, in a case in which the time required for the determination is relatively long, the relatively high grade is given because it is considered that the difficulty of the determination is higher than in a case in which the time required for the determination is relatively short. The processor 16A can similarly give a more appropriate grade by weighting the time according to the skill and reliability degree of each determiner in a case of evaluating the time required for the determination.

A value of a grade of the difficulty of determination of the defect may be given in advance to the determined image stored in the image database 20.

In addition, the processor 16A may extract three or more determined images each having a different value for the grade of the difficulty of determination of the defect from the database, dispose them in ascending or descending order of the grade values, and display them on the display 14.

### [Reception of character information and numerical information]

Up to this point, the processor 16A receives the region of interest of the inspection target image and extracts at least two or more determined images including the region related to the received region of interest, but the processor 16A may receive at least one of the character information or the numerical information and may extract at least two or more determined images related to at least one of the received character information or the numerical information.

The processor 16A receives at least one of character information or the numerical information input by the user. The user can input the character information and the numerical information using a pointing device (not illustrated).

The character information and the numerical information are information including, for example, at least one of a type of the defect, a shape of the defect, a size of the defect, or other keywords related to the defect. In addition, the character information and the numerical information may be defect occurrence position information indicating whether or not the defect occurs in the vicinity of a boundary such as an edge of a component. In this case, the texture in the vicinity of the defect, that is, the feature amount such as contrast, can be designated by the user. Furthermore, the character information and the numerical information may be information indicating whether other defects occur in the vicinity of the defects, that is, whether the defect is isolated or one of a group.

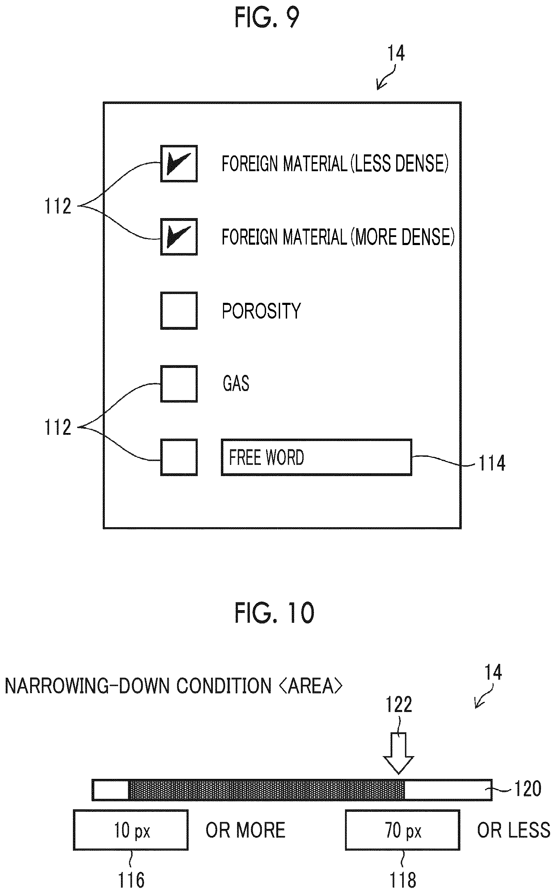

Fig. 9 is a diagram illustrating an example of a screen display of the display 14 for the user to input the character information. Here, an example of selecting and inputting a type of the defect is illustrated. As illustrated in Fig. 9, a plurality of check boxes 112 and text boxes 114 are displayed on the display 14.

In an example illustrated in Fig. 9, "foreign material (less dense)", "foreign material (more dense)", "porosity", "gas", and "free word" are displayed as options. The user can select the type of the defect by checking at least one check box 112 of these options using a pointing device (not illustrated). Here, "foreign material (less dense)" and "foreign material (more dense)" are selected.

In addition, in a case in which the user wants to select a type of the defect other than "foreign material (less dense)", "foreign material (more dense)", "porosity", and "gas", the user checks the check box 112 of the "free word", and further inputs characters into the text box 114 using a keyboard (not illustrated), so that the user can perform a free word search for a type of defect that does not exist in the options.

In addition, Fig. 10 is a diagram illustrating an example of a screen display of the display 14 for the user to input numerical information. Here, an example of inputting a range of the defect area as a narrowing-down condition is illustrated. As illustrated in Fig. 10, text boxes 116 and 118, a slider bar 120, and an arrow 122 are displayed on the display 14.

The text box 116 is for designating the minimum value of a defect area, and the text box 118 is for designating the maximum value of the defect area. Here, "10 px" is input in the text box 116 and "70 px" is input in the text box 118. "px" indicates a pixel. That is, numerical information of 10 pixels or more and 70 pixels or less is input here. The unit of area is not limited to pixels, and may be square millimeters or the like.

In addition, the slider bar 120 is displayed above the text boxes 116 and 118. The slider bar 120 is linked to the values input in the text boxes 116 and 118, and the brightness in a range corresponding to the input values is displayed dark.

The arrow 122 for narrowing down the range of the defect area is displayed above the slider bar 120, and the range indicated by the slider bar 120 can be changed by moving the arrow 122 left or right using the pointing device. In this case, the values displayed in the text boxes 116 and 118 are changed according to the changed range.

In this way, the user can input at least one of the character information or the numerical information. The processor 16A may receive at least one of the character information or the numerical information obtained from the image analysis result of the inspection target image.

### [Others]

The technical scope of the present invention is not limited to the scope described in the above-mentioned embodiment. The configurations and the like in each embodiment can be appropriately combined between the respective embodiments without departing from the gist of the present invention.

### Explanation of References

10: defect inspection system
12: imaging system
14: display
16: image display device
16A: processor
16B: memory
18: input device
20: image database
22: imaging room
24: imaging control unit
26: imaging operating unit
28: image recording unit
30: radiation detector
34: radiation source
100: inspection target image
102: cursor
104: range
106A: determined image
106B: determined image
106C: determined image
106D: determined image
108: button
110A: determined image
110B: determined image
110C: determined image
112: check box
114: text box
116: text box
118: text box
120: slider bar
122: arrow
AX: region of interest
DA: defect
DB: defect
DC: defect
DD: defect
DE: defect
DF: defect
DG: defect
NW: network
OBJ: inspection object
OBJA: determined inspection object
OBJB: determined inspection object
OBJC: determined inspection object
OBJD: determined inspection object
OBJE: determined inspection object
OBJF: determined inspection object
OBJG: determined inspection object
S1 to S5: each step of an image display method

## Claims

1. An image display device comprising:
at least one processor; and
at least one memory that stores an instruction to be executed by the at least one processor,
wherein the at least one processor
acquires an inspection target image in which a first inspection object is imaged,
extracts a determined image from a database in which a plurality of determined images in which a plurality of second inspection objects different from the first inspection object are imaged, respectively, and to which determination results of a defect of the plurality of second inspection objects are given, respectively, are stored, and
displays the inspection target image and at least two or more determined images based on the extracted determined image on a display, and
the at least two or more determined images include a first determined image in which the defect of the second inspection object is visually recognized in a first appearance and a second determined image in which the defect of the second inspection object is visually recognized in a second appearance different from the first appearance and in which the determination result is the same as the first determined image.

2. The image display device according to claim 1,
wherein the at least one processor extracts the first determined image and the second determined image from the database.

3. The image display device according to claim 1,
wherein the at least one processor
extracts the first determined image from the database, and
generates the second determined image based on the first determined image.

4. The image display device according to claim 1,
wherein the at least one processor
generates the first determined image and the second determined image based on the extracted determined image.

5. The image display device according to any one of claims 1 to 4,
wherein in the database, only a plurality of the determined images in which the second inspection object having the defect is imaged are stored.

6. The image display device according to any one of claims 1 to 4,
wherein in the database, a plurality of determined images to which a determination result of presence or absence of the defect of the second inspection object is given are stored, and
each of the first determined image and the second determined image is given a determination result of having the defect.

7. The image display device according to any one of claims 1 to 4,
wherein in the database, a plurality of determined images to which a determination result of a type or a degree of the defect of the second inspection object is given are stored, and
each of the first determined image and the second determined image has the same determination result of the type or the degree of the defect.

8. The image display device according to any one of claims 1 to 7,
wherein at least one processor
receives a region of interest of the inspection target image, and
extracts the at least two or more determined images including a region related to the received region of interest.

9. The image display device according to claim 8,
wherein the at least one processor
receives the region of interest input by a user or the region of interest obtained from an image analysis result of the inspection target image.

10. The image display device according to any one of claims 1 to 9,
wherein the at least one processor
receives at least one of character information or numerical information, and
extracts at least two or more determined images related to at least one of the received character information or numerical information.

11. The image display device according to claim 10,
wherein the at least one processor
receives at least one of the character information or the numerical information input by a user, or at least one of the character information or the numerical information obtained from an image analysis result of the inspection target image.

12. The image display device according to any one of claims 1 to 11,
wherein, in a case in which a display parameter of at least one item of contrast, sharpness, brightness, brightness of a background, or an unique item set by a user of the inspection target image is set as a first reference value,
the first determined image has a first value that is relatively smaller than the first reference value for the display parameter of the at least one item and in which the defect is visually recognized in the first appearance, and
the second determined image has a second value that is relatively larger than the first reference value for the display parameter of the at least one item and in which the defect is visually recognized in the second appearance.

13. The image display device according to claim 12,
wherein the at least one processor
disposes and displays at least three or more determined images based on the extracted determined image in ascending or descending order of a value of the display parameter of the at least one item on the display.

14. The image display device according to claim 12 or 13,
wherein, in a case in which a grade of difficulty of determination of the defect of the inspection target image, which is the unique item set by the user, is set as a second reference value,
the first determined image has a third value that is relatively lower than the second reference value for the grade of the difficulty of the determination of the defect and in which the defect is visually recognized in the first appearance, and
the second determined image has a fourth value that is relatively higher than the second reference value for the grade of the difficulty of the determination of the defect and in which the defect is visually recognized in the second appearance.

15. The image display device according to claim 14,
wherein the at least one processor specifies the second reference value, the third value, and the fourth value based on a value of contrast of brightness between a defect candidate region and a background region excluding the defect candidate region.

16. The image display device according to claim 14 or 15,
wherein the at least one processor specifies the second reference value, the third value, and the fourth value based on at least one of a pixel value, a shape, or an area of a defect candidate region.

17. The image display device according to any one of claims 14 to 16,
wherein the at least one processor specifies the second reference value, the third value, and the fourth value based on at least one of an overlapping manner of defect candidate regions and a texture of a peripheral region of the defect candidate region.

18. The image display device according to any one of claims 14 to 17,
wherein the at least one processor specifies the second reference value, the third value, and the fourth value based on at least one of a skill of a determiner, a reliability degree of the determiner, whether or not there is variation in determination results by a plurality of the determiners, or a time required for determination.

19. The image display device according to claim 14,
wherein the determined image stored in the database is given a value of the grade of the difficulty in advance.

20. The image display device according to any one of claims 14 to 19,
wherein the at least one processor
extracts three or more determined images each having a value of a different grade for the difficulty from the database, and
disposes and displays the three or more determined images in ascending or descending order of the value of the grade on the display.

21. An image display method comprising:
an inspection target image acquisition step of acquiring an inspection target image in which a first inspection object is imaged;
a determined image extraction step of extracting a determined image from a database in which a plurality of determined images in which a plurality of second inspection objects different from the first inspection object are imaged, respectively, and to which determination results of a defect of the plurality of second inspection objects are given, respectively, are stored; and
a display control step of displaying the inspection target image and at least two or more determined images based on the extracted determined image on a display,
wherein the at least two or more determined images include a first determined image in which the defect of the second inspection object is visually recognized in a first appearance and a second determined image in which the defect of the second inspection object is visually recognized in a second appearance different from the first appearance.

22. A program for causing a computer to execute the image display method according to claim 21.

23. A non-transitory computer-readable recording medium on which the program according to claim 22 is recorded.

## Amended claims

### Amended claims under Art. 19.1 PCT

1. An image display device comprising:
at least one processor; and
at least one memory that stores an instruction to be executed by the at least one processor,
wherein the at least one processor
acquires an inspection target image in which a first inspection object is imaged,
extracts a determined image from a database in which a plurality of determined images in which a plurality of second inspection objects different from the first inspection object are imaged, respectively, and to which determination results of a defect of the plurality of second inspection objects are given, respectively, are stored, and
displays the inspection target image and at least two or more determined images based on the extracted determined image on a display, and
the at least two or more determined images include a first determined image in which the defect of the second inspection object is visually recognized in a first appearance and a second determined image in which the defect of the second inspection object is visually recognized in a second appearance different from the first appearance and in which the determination result is the same as the first determined image.

2. The image display device according to claim 1,
wherein the at least one processor extracts the first determined image and the second determined image from the database.

3. The image display device according to claim 1,
wherein the at least one processor
extracts the first determined image from the database, and
generates the second determined image based on the first determined image.

4. The image display device according to claim 1,
wherein the at least one processor
generates the first determined image and the second determined image based on the extracted determined image.

5. The image display device according to any one of claims 1 to 4,
wherein in the database, only a plurality of the determined images in which the second inspection object having the defect is imaged are stored.

6. The image display device according to any one of claims 1 to 4,
wherein in the database, a plurality of determined images to which a determination result of presence or absence of the defect of the second inspection object is given are stored, and
each of the first determined image and the second determined image is given a determination result of having the defect.

7. The image display device according to any one of claims 1 to 4,
wherein in the database, a plurality of determined images to which a determination result of a type or a degree of the defect of the second inspection object is given are stored, and
each of the first determined image and the second determined image has the same determination result of the type or the degree of the defect.

8. The image display device according to any one of claims 1 to 7,
wherein at least one processor
receives a region of interest of the inspection target image, and
extracts the at least two or more determined images including a region related to the received region of interest.

9. The image display device according to claim 8,
wherein the at least one processor
receives the region of interest input by a user or the region of interest obtained from an image analysis result of the inspection target image.

10. The image display device according to any one of claims 1 to 9,
wherein the at least one processor
receives at least one of character information or numerical information, and
extracts at least two or more determined images related to at least one of the received character information or numerical information.

11. The image display device according to claim 10,
wherein the at least one processor
receives at least one of the character information or the numerical information input by a user, or at least one of the character information or the numerical information obtained from an image analysis result of the inspection target image.

12. (Amended) The image display device according to any one of claims 1 to 11,
wherein the first appearance and the second appearance are respectively different from an appearance of a defect in the inspection target image.

13. (Amended) The image display device according to claim 12,
wherein, in a case in which a display parameter of at least one item of contrast, sharpness, brightness, brightness of a background, or an unique item set by a user of the inspection target image is set as a first reference value,
the first determined image has a first value that is relatively smaller than the first reference value for the display parameter of the at least one item and in which the defect is visually recognized in the first appearance, and
the second determined image has a second value that is relatively larger than the first reference value for the display parameter of the at least one item and in which the defect is visually recognized in the second appearance.

14. (Amended) The image display device according to claim 13,
wherein the at least one processor
disposes and displays at least three or more determined images based on the extracted determined image in ascending or descending order of a value of the display parameter of the at least one item on the display.

15. (Amended) The image display device according to claim 13 or 14,
wherein, in a case in which a grade of difficulty of determination of the defect of the inspection target image, which is the unique item set by the user, is set as a second reference value,
the first determined image has a third value that is relatively lower than the second reference value for the grade of the difficulty of the determination of the defect and in which the defect is visually recognized in the first appearance, and
the second determined image has a fourth value that is relatively higher than the second reference value for the grade of the difficulty of the determination of the defect and in which the defect is visually recognized in the second appearance.

16. (Amended) The image display device according to claim 15,
wherein the at least one processor specifies the second reference value, the third value, and the fourth value based on a value of contrast of brightness between a defect candidate region and a background region excluding the defect candidate region.

17. (Amended) The image display device according to claim 15 or 16,
wherein the at least one processor specifies the second reference value, the third value, and the fourth value based on at least one of a pixel value, a shape, or an area of a defect candidate region.

18. (Amended) The image display device according to any one of claims 15 to 17,
wherein the at least one processor specifies the second reference value, the third value, and the fourth value based on at least one of an overlapping manner of defect candidate regions and a texture of a peripheral region of the defect candidate region.

19. (Amended) The image display device according to any one of claims 15 to 18,
wherein the at least one processor specifies the second reference value, the third value, and the fourth value based on at least one of a skill of a determiner, a reliability degree of the determiner, whether or not there is variation in determination results by a plurality of the determiners, or a time required for determination.

20. (Amended) The image display device according to claim 15,
wherein the determined image stored in the database is given a value of the grade of the difficulty in advance.

21. (Amended) The image display device according to any one of claims 15 to 20,
wherein the at least one processor
extracts three or more determined images each having a value of a different grade for the difficulty from the database, and
disposes and displays the three or more determined images in ascending or descending order of the value of the grade on the display.

22. (Amended) An image display method comprising:
an inspection target image acquisition step of acquiring an inspection target image in which a first inspection object is imaged;
a determined image extraction step of extracting a determined image from a database in which a plurality of determined images in which a plurality of second inspection objects different from the first inspection object are imaged, respectively, and to which determination results of a defect of the plurality of second inspection objects are given, respectively, are stored; and
a display control step of displaying the inspection target image and at least two or more determined images based on the extracted determined image on a display,
wherein the at least two or more determined images include a first determined image in which the defect of the second inspection object is visually recognized in a first appearance and a second determined image in which the defect of the second inspection object is visually recognized in a second appearance different from the first appearance.

23. (Amended) A program for causing a computer to execute the image display method according to claim 22.

24. (Added) A non-transitory computer-readable recording medium on which the program according to claim 23 is recorded.
